# EUROPEAN PATENT APPLICATION

(11) **EP 2 536 072 A1**
(43) Date of publication of application: **19.12.2012**
(21) Application number: 11169776.9
(22) Date of filing: 14.06.2011
(51) Int. Cl.: H04L 12/56

(54) **Ethernet switch**

(71) Applicant: SIEMENS AKTIENGESELLSCHAFT, 80333 München (DE)
(72) Inventor: Hansen, Ulrich Vestergaard B., 7400 Herning (DK); Hoejgaard, Jannik, 7330 Brande (DK)

(57) **Abstract**

It is described an Ethernet switch (100). The Ethernet Switch comprises an input terminal (102) and an output terminal (103) for coupling the Ethernet switch to a communication network, a power terminal (106) for coupling the Ethernet switch to a power supply (220), and a control unit (101) being adapted to control the path of signals within the Ethernet switch. In a first operation mode, the control unit is adapted for directing signals received via the input terminal to an internal input terminal (104) of the Ethernet switch, for receiving signals from an internal output terminal (105) and for outputting signals via the output terminal. In a second operation mode, the control unit is adapted for directing signals received via the input terminal to the output terminal. The control unit is adapted to switch from the first operation mode into the second operation mode in response to a predefined trigger event.

## Description

### Field of invention

The present invention relates to the field of communication networks, wherein different devices are connected via Ethernet switches, and in particular to optical communication networks. In particular, the present invention relates to an Ethernet switch. Further, the present invention relates to a communication network. Furthermore, the present invention relates to a method of controlling the path of signals within an Ethernet Switch.

### Art Background

Traditional fiber optical ring topologies, for example between Ethernet switches, have been widely deployed in industrial environments for many years. The topology itself has some great advantages such as a cheap way of gaining resilience from loss of one computer network connection or network device, less cabling complexity in certain deployments or inexpensive and redundant fiber optical infrastructure.

However, such a fiber optical topology requires additional device configuration complexity (through non-scalable redundancy protocols), longer convergence times as rings become larger, variable number of hops, which makes designing predictable performance more complex. Further, the topology only supports resilience from loss of one computer network connection or network device.

As computer networks naturally becomes larger, both the distance between two nodes but also the likelihood of two devices being offline (or cable failures) at the same time due to scheduled maintenance or failures are becoming an ever greater risk. For example, when deploying ring computer networks over long distances, it would be time consuming to remedy the error, if an event or error happened simultaneously in the computer network. At the same time it would be very expensive, as it is likely that the operation of the network would have to be stopped due to lack of control and monitoring.

In a ring topology network, when two network devices are offline at the same time, the communication to all other devices participating in that ring configuration will be interrupted and appear as unreachable/uncontrollable. Such a situation is very expensive as it causes network downtime, and can be very challenging to troubleshoot.

There may be a need for a more reliable or failure-resistant operation of networks.

### Summary of the Invention

This need may be met by the subject matter according to the independent claims. Advantageous embodiments of the present invention are described by the dependent claims.

According to a first aspect of the invention there is provided an Ethernet switch. The Ethernet switch comprises an input terminal and an output terminal for coupling the Ethernet switch to a communication network. Further, the Ethernet switch comprises a power terminal for coupling the Ethernet switch to a power supply. Moreover, the Ethernet switch comprises a control unit being adapted to control the path of signals within the Ethernet switch. In a first operation mode, the control unit is adapted for directing signals received via the input terminal to an internal input terminal of the Ethernet switch, for receiving signals from an internal output terminal and for outputting signals via the output terminal. In a second operation mode, the control unit is adapted for directing signals received via the input terminal to the output terminal. The control unit is adapted to switch from the first operation mode into the second operation mode in response to a predefined trigger event.

This aspect of the invention is based on the idea to extend or maintain the resilience in a communication network even in times where maintenance is taking place, faulty devices are connected to the network, or failures, like loss of power supply, occur causing link-down events. This can be achieved by using the described Ethernet switch. The control unit of the Ethernet switch allows the incoming signals to bypass / pass through in case for instance of power supply or switch failures or maintenance.

According to this aspect of the invention, the control unit may control the physical aspects of the network infrastructure in order to eliminate the disadvantage and vulnerability of ring topologies in computer networks. The Ethernet switch may act as a passive bypass or repeater when a predefined trigger event occurs.

The Ethernet switch may provide common features of an Ethernet switch. Such an Ethernet switch may be called also network switch or switching hub. It may denote a computer networking device that connects network segments. One or more devices, like computers or control units of windturbines may be connected to an Ethernet switch and, via the Ethernet switch to the communication network. The described Ethernet switch may be used preferably in a passive computer network infrastructure being deployed in a ring structure.

The term "power supply" may denote any kind of power source via which the Ethernet switch may be supplied with power.

The control unit may be any kind of element being adapted to provide the required features as described above. In the second operation mode, the control unit may be adapted to act like a passive bypass or repeater. The control unit may be any element being able to change the path of the signals in the second operation mode in respect to the path of the signals in the first operation mode.

By using the described Ethernet switch, the overall availability of the computer network may be increased, as the Ethernet switch may still act as a passive repeater in a failure event. Thus, the vulnerability of the ring topology to dual device failures may be eliminated or at least reduced.

The term "signals" may denote any kind of signals, for example electrical, electromagnetic or optical signals.

According to a further embodiment of the invention, the predefined trigger event corresponds to a trigger signal, wherein the Ethernet switch is adapted to generate the trigger signal.

The Ethernet switch may generate the trigger signal for instance in case of any occurring failure. In a further embodiment, the trigger signal may be generated during maintenance of the Ethernet switch.

According to a further embodiment of the invention, the Ethernet switch is adapted to generate the trigger signal in response to an external signal.

The external signal may denote for example a failure signal provided by the power supply or provided by any other device within the communication network. Further, such an external signal may also be input by a user, for instance by pressing a button on the Ethernet switch.

According to a further embodiment of the invention, the predefined trigger event is associated with a failure of the power supply.

In the event of a failure of the power supply, for instance too high or too low power supply or loss of the power supply, the control unit may be triggered. This may be done by sending a signal, providing a current or voltage peak, removing any power supply, any kind of mechanical mechanism etc.

According to a further embodiment of the invention, the predefined trigger event is associated with a failure of the Ethernet switch.

In case of failure of the Ethernet switch, the control unit may be triggered by sending a signal, providing a current or voltage peak, removing any power supply, etc.

According to a further embodiment of the invention, the predefined trigger event is associated with a disconnection of the power supply.

When the power supply is disconnected from the Ethernet switch, the control unit may be triggered. This may correspond to the triggering in case of power supply failure. Hence, this may be done by sending a signal, providing a current or voltage peak, removing any power supply, any kind of mechanical mechanism etc.

According to a further embodiment of the invention, the signals are optical signals.

In this embodiment, the communication network may be an optical communication network and the control unit may be an optical control unit.

The optical control unit may be any kind of element being adapted to provide the required features as described above. In the second operation mode, the optical control unit may be adapted to act like a passive bypass or repeater. The optical control unit may be any element being able to change the path of the optical signals in the second operation mode in respect to the path of the optical signals in the first operation mode.

The described Ethernet switch may be used according to this embodiment in a passive optical computer network infrastructure being deployed in a ring structure. The optical control unit may affect the physical aspects of the fiber optical infrastructure in order to eliminate the disadvantage and vulnerability of optical ring topologies in computer networks.

According to a further embodiment of the invention, the control unit comprises a prism for directing the optical signals.

In case of the first operation mode, i.e. directing the optical signals internally to the Ethernet switch, such a prism may be arranged in the optical path between the optical input terminal and the optical output terminal. When a trigger event occurs, the optical control unit would switch to the second operation mode. The prism may then be removed from the optical path and the optical signals may be directed directly from the optical input terminal to the optical output terminal.

In the first operation mode, the prism may be fixed in its position for example by using any electrical force, for instance by using an electrical magnet. In the second operation mode, the electrical force may be turned off, for instance in case of loss of the power supply the electrical force may correspond to the power. The electrical magnet may then be deactivated and the prism may be removed from the optical path, for instance due to gravity.

According to a further embodiment of the invention, the control unit comprises a splitter for directing the optical signals.

A splitter may able to change the optical path of incoming optical signals. Such a splitter may be any kind of common splitter. Such a splitter may be adapted to split incoming optical signals in two directions, for instance in direction of the internal optical input terminal and the optical output terminal. As explained in combination with the use of a prism, also a splitter may be arranged in the optical path between the optical input terminal and the optical output terminal. When a trigger event occurs, the optical control unit would switch to the second operation mode. The splitter may then be removed from the optical path and the optical signals may be directed directly from the optical input terminal to the optical output terminal. In another embodiment, the splitter may remain in the optical path.

According to a further embodiment of the invention, the Ethernet switch further comprises at least one electrical port for coupling the Ethernet Switch to an external device.

Any kind of external device, like a computer or a control unit of a windturbine, may be connected to the Ethernet switch.

According to a further embodiment of the invention, the predefined trigger event corresponds to a trigger signal, and the Ethernet switch is adapted to generate the trigger signal in response to an external signal received from the external device.

The external device, for example a control unit of a windturbine, may send a signal to the Ethernet switch, wherein the signal may be the trigger signal. Such a signal may send for example in case of maintenance of the external device.

According to a further embodiment of the invention, the control unit is further adapted to switch from the second operation mode into the first operation mode in response to a further predefined trigger event.

Such a further predefined trigger event may correspond to an external signal, indicating that the predefined trigger event is finished, for example after establishing the power supply again, fixing any failure or after finishing the maintenance.

According to a further aspect of the invention, there is provided a communication network, comprising a plurality of Ethernet switches having some of the above mentioned features, wherein the plurality of Ethernet switches is coupled via cables.

Such a communication network may be in the form of a ring topology. Further, the network may be a passive, for instance optical, network. A plurality of external devices may be coupled to the plurality of Ethernet switches. In the case of an optical communication network, the cables may be optical fibers.

According to a further aspect of the invention, there is provided a method of controlling the path of signals within an Ethernet switch. The Ethernet switch comprises an input terminal and an output terminal for coupling the Ethernet switch to a communication network, a power terminal for coupling the Ethernet switch to a power supply, and an control unit being adapted to control the path of signals within the Ethernet switch. The method comprises in a first operation mode of the control unit, directing signals received via the input terminal to an internal input terminal of the Ethernet switch, receiving signals from an internal output terminal, and outputting signals via the output terminal. The method comprises further, in a second operation mode of the control unit, directing signals received via the input terminal to the output terminal. Furthermore, the method comprises switching the control unit from the first operation mode into the second operation mode in response to a predefined trigger event.

Also this aspect of the invention is based on the idea to extend or maintain the resilience in an optical network even in times where maintenance is taking place, faulty devices are connected to the network, or failures, like loss of power supply, occur causing link-down events. This can be achieved by using the described method. According to the described method, the incoming signals may be bypassed / passed through in case for instance of power supply or switch failures or maintenance.

The method may be implemented by using mechanical, or electrical-mechanical, or passive components for controlling the path of signals within an Ethernet switch.

According to a further aspect of the invention, there is provided a computer program for controlling the path of signals within an Ethernet switch. The computer program, when being executed by a data processor, is adapted for controlling the above described method of controlling the path of signals within an Ethernet switch.

As used herein, reference to a computer program is intended to be equivalent to a reference to a program element containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

According to a further aspect of the invention there is provided a computer-readable medium (for instance a CD, a DVD, a USB stick, a floppy disk or a hard disk), in which a computer program for controlling the path of signals within an Ethernet switch is stored, which computer program, when being executed by a processor, is adapted to carry out or control a method of controlling the path of signals within an Ethernet switch.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows an Ethernet switch according to an embodiment of the invention.
Figure 2 shows an Ethernet switch according to a further embodiment of the invention in the first operation mode of an optical control unit.
Figure 3 shows an Ethernet switch according to a further embodiment of the invention in the second operation mode of an optical control unit.
Figure 4 shows a communication network.
Figure 5 shows a communication network with failures in network devices.

### Detailed Description

The illustration in the drawing is schematically. It is noted that in different figures, similar or identical elements are provided with the same reference signs.

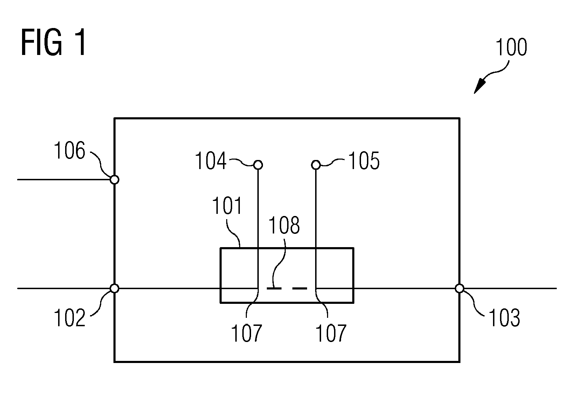

Figure 1 shows an Ethernet switch 100 according to an embodiment of the invention. The Ethernet switch comprises an input terminal 102 and an output terminal 103 for coupling the Ethernet switch to a communication network. The communication network may have a ring topology and may be a passive network. The Ethernet switch comprises a power terminal 106 for coupling the Ethernet switch to a power supply. The power supply may be for example a power supply unit.

The Ethernet switch comprises further a control unit 101. The control unit directs (107), in a first operation mode, signals from the optical input terminal 102 to an internal input terminal 104 of the Ethernet switch, receives (107) signals from an internal output terminal 105 and outputs signals via the output terminal 103.

In a second operation mode, the control unit 101 acts as a passive repeater. It directs (108) signals received via the input terminal directly to the output terminal.

The control unit switches from the first operation mode into the second operation mode in response to a predefined trigger event. Such a trigger event may be for example loss of the power supply.

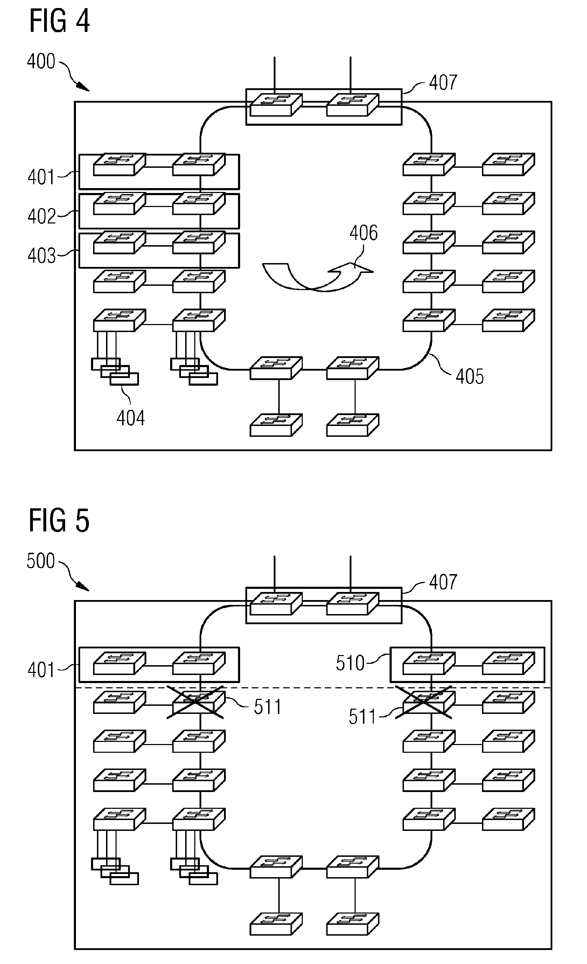

In Figure 4, a communication network 400 is shown. Such a communication network may be deployed in a ring topology. A plurality of systems, e.g. a first system 401, a second system 402, a third system 403, etc., may be connected via a singlemode cable 405.

TCP/IP devices 404, for instance computers, may be connected to the network via Ethernet switches. A ring redundancy 406 is provided. Also aggregated or aggregation switches 407 or any other kind of network device may be connected to the network.

Figure 5 shows the case of failed devices 511 in a communication network 500. In the case of any failure of at least two devices, a part of the network can not be reached anymore.

All devices below the dotted line, i.e. after the systems 401 and 510 cannot be reached anymore.

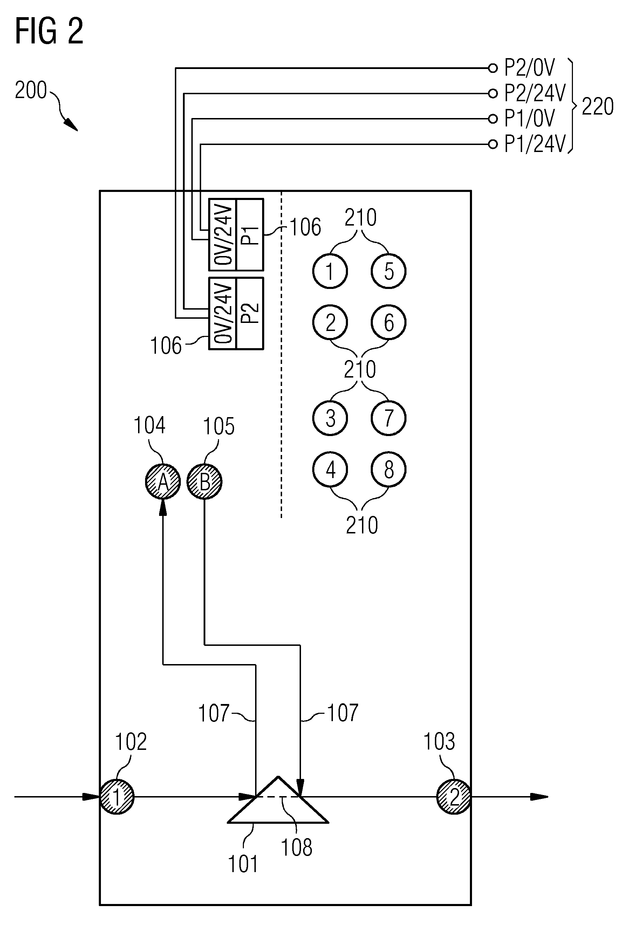

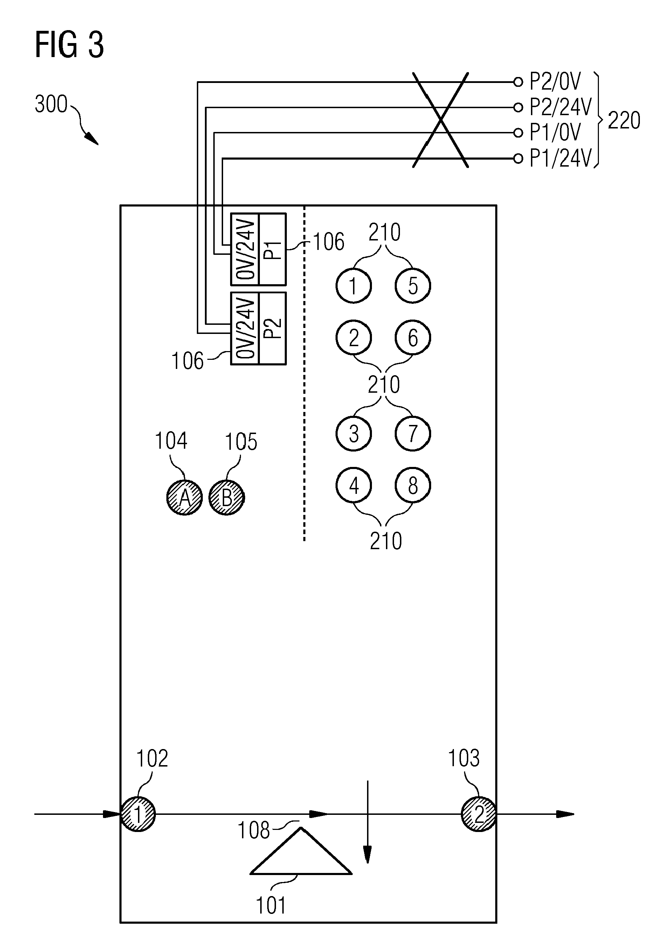

To avoid such a completely failure, an Ethernet switch according to herein described embodiments may be used. One further embodiment of such an Ethernet switch is described in Figures 2 and 3. In these embodiments, an Ethernet switch for an optical communication network is shown. Thus, the Figures 2 and 3 refers by way of example to optical signals. The Ethernet switch described in Figures 2 and 3 may also be adapted to be used for a communication signal using electrical signals.

In addition to the Ethernet switch described in Figure 1, the Ethernet switch 200 shows a plurality of ports 210 for connecting external devices. Further, the Ethernet switch 200 comprises two power terminals 107, for connecting the Ethernet switch to two redundant power supplies 220. Each power supply is connected via two lines.

In the first operation mode, the optical control unit 101, shown in Figure 2 as a prism, directs optical signals from the optical input terminal 102 to the internal optical input terminal 104. Further, it receives optical signals from the internal optical output terminal 105 and directs these signals to the optical output terminal 103.

As shown in Figure 3, the Ethernet switch 300 is disconnected from the power supplies 220, and the optical control unit 101 acts in the second operation mode as a repeater. The prism falls down, for example due to a deactivated electric magnet, and enables the direct path 108 between the optical input terminal 102 and the optical output terminal 103.

Also other types may be used instead of a prism, for example a splitter or any kind of switch.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:
The invention is based on the idea to extend or maintain the resilience in an optical network even in times where maintenance is taking place, faulty devices are connected to the network, or failures, like loss of power supply, occur causing link-down events. This can be achieved by using the described Ethernet switch or described method. The optical control unit of the Ethernet switch allows the optical light to bypass / pass through in case for instance of power supply or switch failures or maintenance.

According to the invention, the optical control unit or method may control the physical aspects of the fiber optical infrastructure in order to eliminate the disadvantage and vulnerability of optical ring topologies in computer networks. The Ethernet switch may act as a passive bypass or repeater when a predefined trigger event occurs.

## Claims

1. An Ethernet switch (100), comprising
an input terminal (102) and an output terminal (103) for coupling the Ethernet switch to a communication network,
a power terminal (106) for coupling the Ethernet switch to a power supply (220), and
a control unit (101) being adapted to control the path of signals within the Ethernet switch,
wherein, in a first operation mode, the control unit is adapted for directing signals received via the input terminal to an internal input terminal (104) of the Ethernet switch, for receiving signals from an internal output terminal (105) and for outputting signals via the output terminal,
wherein, in a second operation mode, the control unit is adapted for directing signals received via the input terminal to the output terminal,
wherein the control unit is adapted to switch from the first operation mode into the second operation mode in response to a predefined trigger event.

2. The Ethernet switch (100) as set forth in claim 1,
wherein the predefined trigger event corresponds to a trigger signal,
wherein the Ethernet switch is adapted to generate the trigger signal.

3. The Ethernet switch (100) as set forth in claim 2,
wherein the Ethernet switch is adapted to generate the trigger signal in response to an external signal.

4. The Ethernet switch (100) as set forth in any one of the preceding claims,
wherein the predefined trigger event is associated with a failure of the power supply (220).

5. The Ethernet switch (100) as set forth in any one of the preceding claims,
wherein the predefined trigger event is associated with a failure of the Ethernet switch.

6. The Ethernet switch (100) as set forth in any one of the preceding claims,
wherein the predefined trigger event is associated with a disconnection of the power supply (220).

7. The Ethernet switch (100) as set forth in any one of the preceding claims,
wherein the signals are optical signals.

8. The Ethernet switch (100) as set forth in claim 7,
wherein the control unit (101) comprises a prism for directing the optical signals.

9. The Ethernet switch (100) as set forth in claim 7,
wherein the control unit comprises a splitter for directing the optical signals.

10. The Ethernet switch (101) as set forth in any one of the preceding claims,
further comprising at least one electrical port (210) for coupling the Ethernet Switch to an external device.

11. The Ethernet switch (100) as set forth in claim 10,
wherein the predefined trigger event corresponds to a trigger signal, and
wherein the Ethernet switch is adapted to generate the trigger signal in response to an external signal received from the external device.

12. The Ethernet switch (100) as set forth in any one of the preceding claims,
wherein the control unit (101) is further adapted to switch from the second operation mode into the first operation mode in response to a further predefined trigger event.

13. A communication network, comprising a plurality of Ethernet switches (101) as set forth in any one of the claims 1 to 12,
wherein the plurality of Ethernet switches is coupled via cables.

14. A method of controlling the path of signals within an Ethernet switch, wherein the Ethernet switch comprises an input terminal and an output terminal for coupling the Ethernet switch to a communication network, a power terminal for coupling the Ethernet switch to a power supply, and a control unit being adapted to control the path of signals within the Ethernet switch,
the method comprising
in a first operation mode of the control unit, directing signals received via the input terminal to an internal input terminal of the Ethernet switch,
receiving signals from an internal output terminal,
and
outputting signals via the output terminal,
in a second operation mode of the control unit, directing signals received via the input terminal to the output terminal, and
switching the control unit from the first operation mode into the second operation mode in response to a predefined trigger event.
